# EUROPÄISCHE PATENTSCHRIFT

(11) **EP 0 962 512 B1**
(45) Veröffentlichungstag und Bekanntmachung des Hinweises auf die Patenterteilung: **30.07.2003**
(21) Anmeldenummer: 99890146.6
(22) Anmeldetag: 04.05.1999
(51) Int. Cl.: C09K 3/18

(54) **Streugut für Verkehrsflächen und Verfahren zu seiner Herstellung**
Grit for traffic areas and method for manufacturing the same
Matériau à repandre pour des zones de circulation et procédé pour sa production

(30) Priorität: 19.05.1998 AT 85398
(43) Veröffentlichungstag der Anmeldung: 08.12.1999
(73) Patentinhaber: Zwittnig, Leopold Dipl.-Ing., 8010 Graz (AT)
(72) Erfinder: Zwittnig, Leopold Dipl.-Ing., 8010 Graz (AT)
(74) Vertreter: Müllner, Erwin, Dr.

(56) Entgegenhaltungen:
- EP-A- 0 537 635
- DE-A- 3 001 930
- LU-A- 81 036
- DATABASE WPI Section Ch, Week 7906 Derwent Publications Ltd., London, GB; Class C04, AN 79-11163B XP002112245 & JP 53 149878 A (HOKKAI MINECAL KK), 27. Dezember 1978 (1978-12-27)

## Beschreibung

Die Erfindung bezieht sich auf Streugut für Verkehrsflächen und auf ein Verfahren zu seiner Herstellung.

Zur Erhöhung der Verkehrssicherheit muss bei tiefen Temperaturen bzw. bei Schneefall Streugut auf die von der Vereisung betroffenen Verkehrsflächen aufgebracht werden.

Als Streugut wird einerseits meist Steinsplit (Streuriesel), z.B. aus Basalt oder Kalkstein, zur Erhöhung der Rauhigkeit der Verkehrsflächen und anderseits meist Steinsalz (Hauptbestandteil NaCl) als Auftaumittel eingesetzt. Das Aufbringen von Streuriesel und Salz erfolgt in der Regel mittels gesonderter Streufahrzeuge.

Häufig wird aber auch dem Steinsplitt (Streuriesel) zwischen 4-10% Salz zugemischt, um ihn einerseits rieselfähig zu erhalten und anderseits, besonders bei geringem Schneefall bzw. bei Glatteis, um durch die Tauwirkung des Salzes dem Streuriesel einen höheren Wirkungsgrad in Bezug auf die Erhöhung des Reibungswiderstandes zu geben.

Der Erfindung liegt der Gedanke zugrunde, dass durch Aufbrechen und Aufbereiten von Salzschlacke aus der Sekundäraluminiumproduktion ein Produkt gewonnen werden kann, das sich ausgezeichnet als Streugut für Verkehrsflächen eignet.

Die Erfindung besteht daher in der Verwendung von zerkleinerter Salzschlacke aus der Sekundäraluminiumproduktion als Streugut für Verkehrsflächen.

Die bei der Sekundäraluminiumproduktion anfallende Salzschlacke enthält neben metallischem Aluminium und Aluminiumoxid sowie geringen Mengen an Kalium, Kupfer, Eisen, Magnesium, Mangan, Silicium und Zink in Form von Oxiden, Sulfaten, Phosphaten und Chloriden etwa 60% Alkalichlorid, vorwiegend Natriumchlorid.

Eine Salzschlacke aus der Sekundäraluminiumproduktion hat beispielsweise folgende Zusammensetzung:

| Element | % | Element | % |
|---|---|---|---|
| Cl | 30,5 | Cu | 0,234 |
| F | <0,0001 | Fe | 0,54 |
| SO₄ | 0,9 | K | 9,5 |
| N | 0,5 | Mg | 0,94 |
| P | 0,035 | Mn | 0,11 |
| Ag | 0,00001 | Mo | 0,0006 |
| Al (gebunden) | 8,97 | Na | 15,8 |
| As | 0,00002 | Ni | 0,019 |
| Ba | 0,0406 | Pb | 0,014 |
| Be | 0,00001 | Sb | 0,002 |
| Ca | 1,74 | Se | 0,0013 |
| Cd | 0,00017 | Si | 8,85 |
| Co | 0,00049 | Sn | 0,0046 |
| Cr | 0,0197 | Zn | 0,0615 |

Zusätzlich enthält die Schlacke 5-7% metallisches Aluminium.

Durch Aufbrechen und Aufbereiten der Salzschlacke aus der Sekundäraluminiumproduktion wird ein Streugut erhalten, das ähnlich physikalische Kennwerte bezüglich Rauhigkeit und Dichte aufweist, wie Streuriesel aus Basalt oder Kalkstein, das aber aufgrund des Gehaltes an Alkalichlorid zum Teil wasserlöslich ist.

Auf Verkehrsflächen aufgebracht wirkt das alkalichloridhaltige Streugut in Bezug auf die Erzielung eines genügend hohen Reibungswiderstandes wie herkömmlicher Streuriesel und gleichzeitig wegen seines hohen verfügbaren Salzgehaltes im Prinzip gleich wie eine herkömmliche Salzbehandlung der Verkehrsflächen. Mit herkömmlichen Split und Sandkörnern liegt der Gleitbeiwert am blockierten Rad auf einer Fahrbahn zwischen 0,20 bis 0,25. Der Gleitbeiwert am blockierten Rad auf einer Fahrbahn, auf der erfindungsgemäß zu verwendendes Streugut aufgebracht ist, liegt zunächst ebenfalls zwischen 0,20 bis 0,25, steigt jedoch auf Grund des Salzgehaltes auf Werte zwischen 0,60 bis 0,4.

Vorzugsweise wird eine Salzschlacke verwendet, aus der das metallische Aluminium mechanisch soweit wie möglich abgetrennt worden ist. Dadurch wird das metallische Aluminium rückgewonnen und die Zerkleinerung der Salzschlacke auf die gewünschte Korngröße ermöglicht bzw. erleichtert. Durch Abtrennung des metallischen Aluminiums, das in der Regel in Menge von 5 bis 7% vorhanden ist, kann der Gehalt an metallischem Aluminium beispielsweise auf einen Wert unter 1% gesenkt werden.

Erfindungsgemäß wird eine Salzschlacke mit einer Korngröße von 1 bis 15, vorzugsweise 1 bis 12, mm verwendet. Je nach Schneelage haben sich Korngrößen von 3 bis 5 mm oder von 4 bis 8 mm besonders bewährt.

Gewünschtenfalls kann dem erfindungsgemäß zu verwerteten Streugut herkömmlicher Split zugemischt werden.

Das Verfahren zur Herstellung des erfindungsgemäß verwendbaren Streugutes ist dadurch gekennzeichnet, dass Salzschlacke aus der Sekundäraluminiumproduktion grob zerkleinert, anschließend das metallische Aluminium abgetrennt und die verbleibende Salzschlacke auf eine Korngröße von 1 bis 15, vorzugsweise 1 bis 12, insbesondere 3 bis 5 oder 4 bis 8, mm zerkleinert und danach je nach Bedarf ein- oder mehrstufig gesiebt wird. Das bei der Herstellung anfallende pulverförmige Material kann als Streusalz verwendet werden.

Zur Herstellung des Streugutes wird die vorsortierte Salzschlacke, welche in Stücken bis zu mehreren hundert Kilogramm anfällt, zuerst, z.B. mittels eines Baggers, soweit zerschlagen, dass sie mit einem Backenbrecher weiter grob zerkleinert werden kann. Danach wird mechanisch bzw. mittels einer Nichteisenabscheideanlage das in diesem Gemisch vorhandene metallische Aluminium soweit wie möglich abgeschieden und vom zukünftigen Streuriesel getrennt. Die mechanische Abtrennung des metallischen Aluminiums erfolgt - soweit es sich um große Stücke handelt - händisch und für kleinere Teilchen durch Windsichtung mit Gebläse und Sieb; die Trennung erfolgt auf Grund des spezifischen Gewichtes. Die kleinen Teilchen des metallischen Aluminiums können auch in einer Nichteisenabscheideanlage abgetrennt werden. Es handelt sich hiebei um einen Wirbelstromabscheider, wobei ein elektrisches Feld gebildet wird und die metallischen Teilchen durch die elektrischen Feldlinien in eine Richtung verschoben und durch eine Falle abgeschieden werden. Daraufhin wird auf die gewünschte Korngröße zerkleinert und je nach Bedarf ein oder mehrstufig gesiebt.

Durch die Verwendung der Salzschlacke aus der Sekundäraluminiumproduktion ist es nicht mehr notwendig, wie bisher nach dem Aufbringen von Streusplitt auf die Verkehrsflächen anschließend noch Steinsalz aufzustreuen oder aber dem Steinsplitt vor seiner Aufbringung Salz zuzusetzen, sodass sich durch den Wegfall von Arbeitsschritte eine Vereinfachung bei der Aufbringung von Streugut ergibt. Des Weiteren ergibt sich noch ein ökologischer Effekt: Durch die Nutzbarmachung des in der Salzschlacke befindlichen Alkalihalogenids werden nicht nur die fossilen Salzvorräte geschont, sondern auch die Aufsalzung des kontinentalen Süßwassers vermindert.

## Patentansprüche

1. Verwendung von zerkleinerter Salzschlacke aus der Sekundäraluminiumproduktion als Streugut für Verkehrsflächen.

2. Verwendung von zerkleinerter Salzschlacke aus der Sekundäraluminiumproduktion, aus der das metallische Aluminium mechanisch soweit wie möglich abgetrennt worden ist, für den in Anspruch 1 genannten Zweck.

3. Verwendung von auf eine Korngröße von 1 bis 15, vorzugsweise 1 bis 12, insbesondere 3 bis 5 oder 4 bis 8, mm zerkleinerter Salzschlacke aus der Sekundäraluminiumproduktion für den in Anspruch 1 genannten Zweck.

4. Verfahren zur Herstellung von Streugut für Verkehrsflächen, **dadurch gekennzeichnet, dass** Salzschlacke aus der Sekundäraluminiumproduktion grob zerkleinert, anschließend das metallische Aluminium abgetrennt und die verbleibende Salzschlacke auf eine Korngröße von 1 bis 15, vorzugsweise 1 bis 12, insbesondere 3 bis 5 oder 4 bis 8, mm zerkleinert und danach je nach Bedarf ein- oder mehrstufig gesiebt wird.

## Claims

1. Use of comminuted salt slag from secondary aluminium production as road salt for traffic areas.

2. Use of comminuted salt slag from secondary aluminium production, from which the metallic aluminium has been mechanically separated as far as possible, for the purpose stated in Claim 1.

3. Use of salt slag from secondary aluminium production, comminuted to a particle size of 1 to 15, preferably 1 to 12, in particular 3 to 5 or 4 to 8, mm, for the purpose stated in Claim 1.

4. Process for the production of road salt for traffic areas, **characterized in that** salt slag from secondary aluminium production is coarsely comminuted, the metallic aluminium is then separated off and the remaining salt slag is comminuted to a particle size of 1 to 15, preferably 1 to 12, in particular 3 to 5 or 4 to 8, mm and then sieved in one or more stages, depending on requirements.

## Revendications

1. Utilisation de scories de sel concassées de la production d'aluminium de deuxième fusion comme poussière abrasive pour des surfaces de circulation.

2. Utilisation de scories de sel concassées de la production d'aluminium de deuxième fusion, dont l'aluminium métallique a été mécaniquement séparé dans la mesure du possible, dans le but spécifié dans la revendication 1.

3. Utilisation de scories de sel concassées d'une grosseur de grain de 1 à 15, de préférence 1 à 12, en particulier 3 à 5 ou 4 à 8 mm, de la production d'aluminium de deuxième fusion pour le but spécifié dans la revendication 1.

4. Procédé de fabrication de poussière abrasive pour des surfaces de circulation, **caractérisé en ce que** des scories de sel de la production d'aluminium de deuxième fusion sont concassées grossièrement, que l'aluminium métallique est ensuite séparé et des scories de sel restantes sont concassées de préférence en une grosseur de grain de 1 à 15, 1 à 12, en particulier 3 à 5 ou 4 à 8 mm et tamisées au besoin selon plusieurs niveaux.
